# EUROPEAN PATENT SPECIFICATION

(11) **EP 3 782 710 B1**
(45) Date of publication and mention of the grant of the patent: **09.08.2023**
(21) Application number: 20150015.4
(22) Date of filing: 02.01.2020
(51) Int. Cl.: B01D 1/00

(54) **PURE FORMIC ACID GAS SUPPLYING DEVICE, PURE-FORMIC-ACID-GAS-SUPPLIED SOLDERING SYSTEM, AND METHOD FOR SUPPLYING PURE FORMIC ACID GAS**
VORRICHTUNG ZUR ZUFUHR VON REINEM AMEISENSÄUREGAS, LÖTSYSTEM MIT ZUFUHR VON REINEM AMEISENSÄUREGAS UND VERFAHREN ZUR ZUFUHR VON REINEM AMEISENSÄUREGAS
DISPOSITIF D'ALIMENTATION EN GAZ D'ACIDE FORMIQUE PUR, SYSTÈME DE SOUDAGE ALIMENTÉ EN GAZ D'ACIDE FORMIQUE PUR ET PROCÉDÉ D'ALIMENTATION EN GAZ ACIDE FORMIQUE PUR

(30) Priority: 23.08.2019 TW 108130336
(43) Date of publication of application: 24.02.2021
(73) Proprietor: 3S Silicon Tech, Inc., Sinfong Township, Hsinchu County (TW)
(72) Inventor: YEH, Kuo-Liang, HSINCHU COUNTY (TW); PENG, Jung-Kuei, HSINCHU COUNTY (TW); CHEN, Yu-Tao, HSINCHU COUNTY (TW); HUANG, Wen-Ting, HSINCHU COUNTY (TW); HUANG, Cheng-Shang, HSINCHU COUNTY (TW)
(74) Representative: Pallini Gervasi, Diego

(56) References cited:
- CN-U- 209 196 903
- US-A- 4 830 710
- US-A- 4 929 312
- US-B1- 6 344 407
- Lipták Béla: "3.6 Differential Pressure Level Detectors" In: "Instrument Engineer's Handbook, Fourth Edition - Process Measurement and Analysis, Volume I.", 1 January 2003 (2003-01-01), CRC Press, XP055687625, ISBN: 978-0-8493-1083-6 pages 1-2, * see in particular figures 3.6i, 3.6j and 3.6k as well as entire pages 459 to 461 *

## Description

### 1. Field of the Invention

The present invention relates to a formic acid gas supplying device and a formic acid gas supplying method of a soldering system.

### 2. Description of the Prior Arts

In traditional soldering technology, the soldering flux combined inside the solder paste causes various problems, including the negatively-affected soldering quality. Therefore, a soldering technology, in which formic acid gas is applied instead of the soldering flux, is invented in the soldering technical field.

US 6 344 407 B1 discloses a method of manufacturing and solder joints using formic acid.

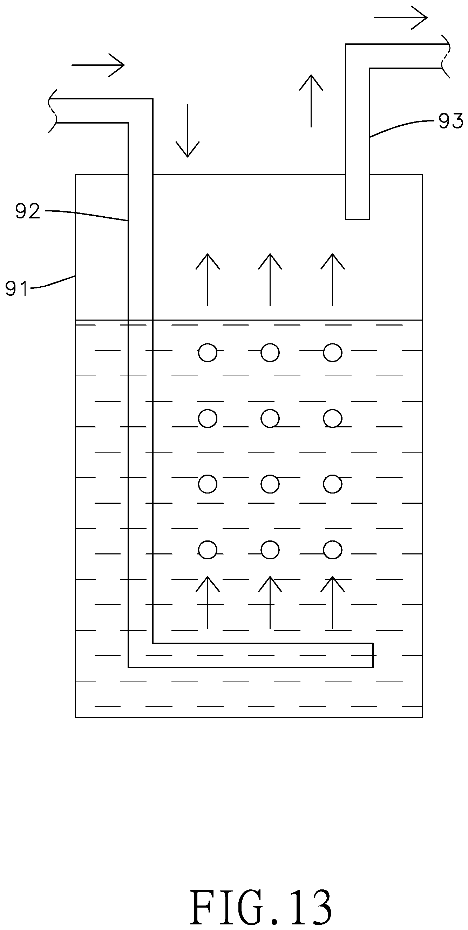

With reference to Fig. 13, a conventional formic acid gas supplying device comprises a sealed tank 91, an air inlet pipe 92, and an air outlet pipe 93. The tank 91 is used to contain liquid formic acid. The air inlet pipe 92 is mounted through the tank 91 and extends into the liquid formic acid. The air outlet pipe 93 is mounted through the tank 91 and is located above a liquid surface of the liquid formic acid.

By this, a mixed gas which comprises formic acid and nitrogen can be generated via aeration by pumping nitrogen into the formic acid through the air inlet pipe 92, and then the formic-acid-nitrogen-mixed gas can be supplied by the air outlet pipe 93.

However, in the abovementioned formic acid gas supplying method, the partial pressure of the formic acid gas is low and only reaches 40 to 50 torr, i.e. 5332.9 to 6666.1 Pa (about 5% in the mixed gas), while the partial pressure of the nitrogen is high and reaches 710 to 720 torr, i.e. 94658.9 to 95992.1 Pa (about 95% in the mixed gas). Therefore, the reactivity of the formic acid gas is seriously impacted by the nitrogen, thereby prolonging the cycle time in soldering and affecting the soldering efficiency. In addition, the concentrations of the formic acid gas in the supplied mixed gas cannot be precisely controlled with the abovementioned formic acid gas supplying method, thereby affecting the yield rate of soldering and leading to high consumption of the formic acid, both of which eventually lead to high cost in soldering.

In other words, the disadvantages of the abovementioned formic acid gas supplying method comprise:
1. The partial pressure and the concentrations of the formic acid gas are low, and the processing time is long.
2. The reaction rate is decreased because the nitrogen, which does not participate in the reaction, obstructs the contact between the formic acid and metal oxides. For example, under a condition that the partial pressure ratio of the formic acid gas and the nitrogen is 40:720, each formic acid molecule is surrounded by eighteen nitrogen molecules in average. Therefore, a formic acid molecule must pass across eighteen nitrogen molecules to contact the metal oxides for reaction.
3. The formic acid gas diffuses into the solder powder shallowly, which means the formic acid gas is unable to diffuse to the center of the solder powder. Therefore, quality and reliability of soldering decrease. Specifically, because the speed of the formic acid gas diffusing into the solder powder is low, only the solder granules located near the edge of the solder powder undergo oxidation-reduction (redox) and are melted while the solder granules located near the center of the solder powder remain without redox, and the melted solder on the edge, which is liquid metal, stops the formic acid gas from diffusing further into the center of the solder powder. In summary, the solder near the edge is melted first due to the slow reaction speed of the formic acid gas, and the solder powder that has not completely gone through redox would lead to low structural strength after soldering.

To overcome the shortcomings, the present invention provides a pure-formic-acid-gas-supplied soldering system to mitigate or obviate the aforementioned problems.

The main objective of the present invention is to provide a pure-formic-acid-gas-supplied soldering system, which is capable of supplying pure formic acid gas to raise the reactivity of formic acid gas and to reduce consumption of formic acid gas.

The pure-formic-acid-gas-supplied soldering system has a pure formic acid gas supplying device, a multi-vacuum-chamber soldering furnace, a vacuum pump, and a formic acid exhaust processing device. The pure formic acid gas supplying device has a tank, a liquid pipeline, a heating assembly, a heating assembly, a liquid level sensing assembly, at least one gas pipeline, a pressure gauge, and a valve. The tank has a bottom base, a top cover, a surrounding wall, and an inner space. The surrounding wall is connected to a periphery of the bottom base and is connected to a periphery of the top cover. The inner space is surrounded by the bottom base, the top cover, and the surrounding wall, and is sealed. The liquid pipeline is connected to the tank and communicates with the inner space of the tank. The liquid pipeline is adapted to feed the liquid formic acid into the inner space of the tank. The heating assembly is connected to the bottom base of the tank and is capable of heating the bottom base so that the bottom base is capable of heating the liquid formic acid to evaporate the liquid formic acid and transform the liquid formic acid into the formic acid gas. The liquid level sensing assembly is mounted inside the tank and is capable of detecting a liquid level of the liquid formic acid in the tank. The at least one gas pipeline is connected to the tank at a position higher than the liquid level of the liquid formic acid and communicates with the inner space of the tank. The at least one gas pipeline is adapted to output the pure formic acid gas. The pressure gauge is mounted on the at least one gas pipeline and is capable of measuring pressure in the at least one gas pipeline. The valve mounted on the at least one gas pipeline and selectively blocks the at least one gas pipeline. The multi-vacuum-chamber soldering furnace is adapted to solder a component and has a platform, an upper cover, multiple heating bases, multiple vacuum covers, multiple driving mechanisms, multiple vacuum pipelines, and at least one transporting mechanism. Two opposite ends of the platform are an inlet end and an outlet end respectively. An upper cover selectively covers the platform. The heating bases are mounted on the platform and are arranged along a direction from the inlet end to the outlet end. The vacuum covers are mounted on the upper cover, wherein when the upper cover covers the platform, each one of the vacuum covers is aligned with a respective one of the heating bases and said vacuum cover is moveable upward or downward relative to the upper cover to cover and seal the corresponding heating base to form a vacuum chamber. The at least one gas pipeline communicates with the vacuum chamber and is adapted to feed the pure formic acid gas into the vacuum chamber. The driving mechanisms are mounted in the upper cover and are respectively connected to the vacuum covers. The driving mechanisms are capable of moving the vacuum covers relative to the upper cover. The vacuum pipelines are respectively connected to the vacuum chambers formed by the vacuum covers. The at least one transporting mechanism is connected to the platform and is capable of sequentially transferring the component to each one of the heating bases from the inlet end to the outlet end. The vacuum pump communicates with the vacuum pipelines of the multi-vacuum-chamber soldering furnace and is capable of withdrawing air from the vacuum chamber to form a vacuum inside the vacuum chamber. The formic acid exhaust processing device has an intake end, an atmospheric plasma generator, a catalyst carrier, and an exhaust end. The intake end communicates with the vacuum pump. The vacuum pump is capable of withdrawing the air from the vacuum chamber into the formic acid exhaust processing device through the intake end. The atmospheric plasma generator communicates with the intake end and is capable of generating atmospheric plasma. The catalyst carrier communicates with the atmospheric plasma generator and contains a catalyst for oxidizing formic acid. The exhaust end communicates with the catalyst carrier, wherein the intake end, the atmospheric plasma generator, the catalyst carrier, and the exhaust end are arranged sequentially.

In order to supply pure formic acid gas, a vacuum is formed inside the tank first. Then, liquid formic acid is filled into the tank and is heated and evaporated, and transforms into formic acid gas. By this, the tank contains only pure formic acid gas without any other gases. Therefore, the present invention supplies pure formic acid gas to prevent the formic acid gas from being blocked by the gases which do not participate in the reaction, thereby increasing efficiency.

When in use, the liquid formic acid is filled into the sealed inner space of the tank through the liquid pipeline, and then the bottom base of the tank is heated by the heating assembly to heat the liquid formic acid indirectly to evaporate it. Then, the pure formic acid gas is obtained and is capable of being supplied to the soldering machine through the gas pipeline. In summary, the present invention supplies pure formic acid gas to precisely control the concentration of the formic acid, and to increase the reactivity of the formic acid because no obstructions from other gases will be caused. Therefore, the present invention significantly shortens the cycle time of the soldering process to increase productivity, and also significantly reduces the consumption of the formic acid by controlling the concentration of the formic acid precisely and stably, thereby reducing the cost.

Other objectives, advantages and novel features of the invention will become more apparent from the following detailed description when taken in conjunction with the accompanying drawings.

### IN THE DRAWINGS

Fig. 1 is a perspective view of a pure formic acid gas supplying device in accordance with the present invention;
Fig. 2 is an exploded view of the pure formic acid gas supplying device in Fig. 1;
Fig. 3 is a side view in partial cross section of the pure formic acid gas supplying device in Fig. 1;
Fig. 4 is a side view in cross section of the pure formic acid gas supplying device in Fig. 1, showing the bottom base of the tank;
Fig. 5 is a schematic view of a pure-formic-acid-gas-supplied soldering system in accordance with the present invention;
Fig. 6 is a perspective view of the pure-formic-acid-gas-supplied soldering system in Fig. 5, showing the multi-vacuum-chamber soldering furnace;
Fig. 7 is a perspective view in cross section of the pure-formic-acid-gas-supplied soldering system in Fig. 5, showing the multi-vacuum-chamber soldering furnace;
Fig. 8 is an exploded view of the pure-formic-acid-gas-supplied soldering system in Fig. 5, showing the formic acid exhaust processing device;
Fig. 9 is a flow chart of the method for supplying pure formic acid gas in accordance with the present invention;
Figs. 10A to 10E are schematic views of a solder melting simulation test in accordance with the present invention, showing the results;
Figs. 11 and 12 are schematic views of a formic acid gas permeability test, showing constructions of a sample; and
Fig. 13 is a schematic view of a conventional supplying device for supplying mixed gas comprising formic acid and nitrogen.

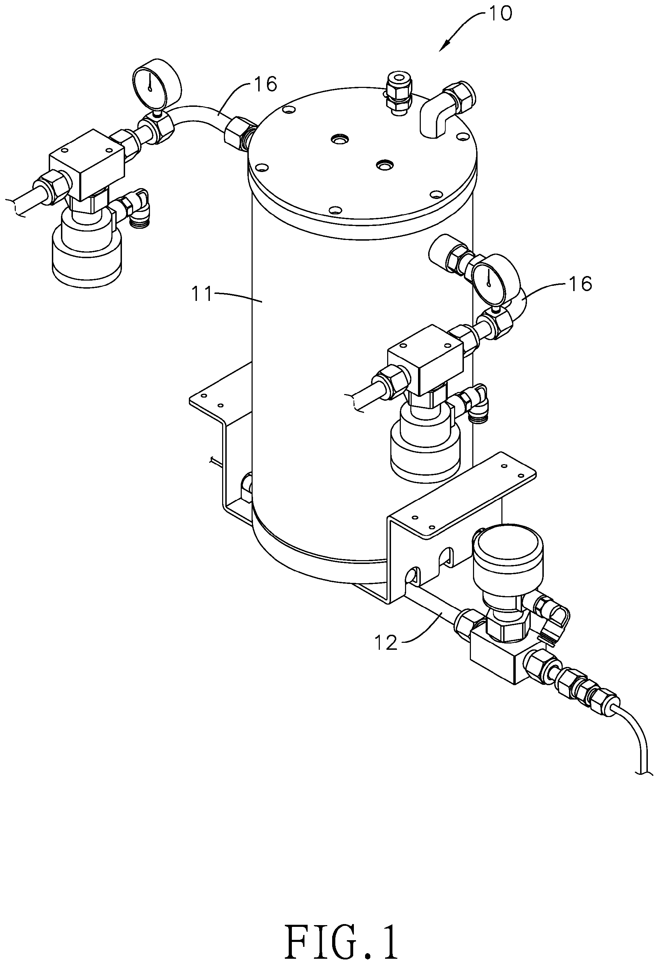

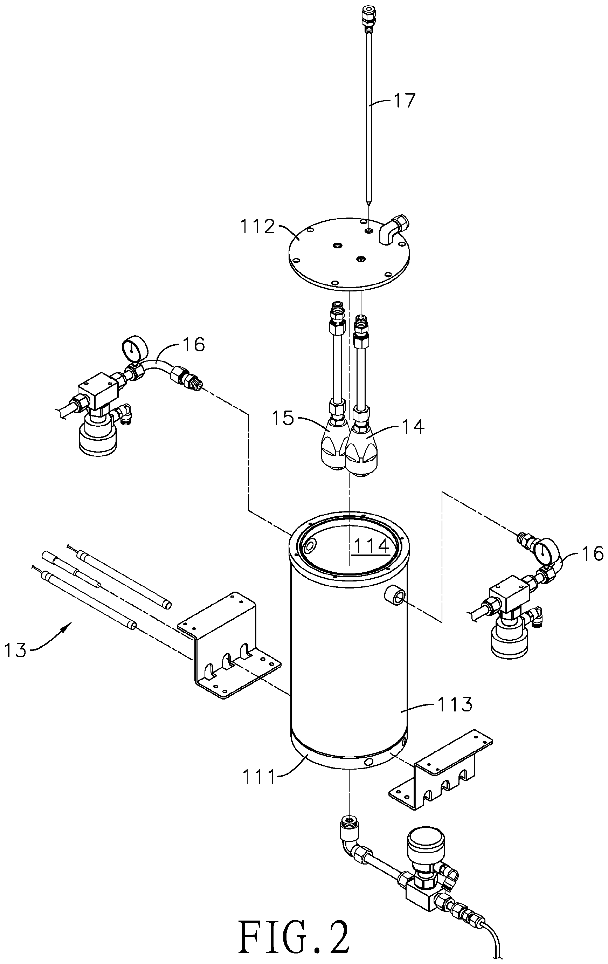

With reference to Figs. 1 and 2, a pure formic acid gas supplying device 10 of the present invention is adapted to heat liquid formic acid and supply pure formic acid gas. The pure formic acid gas supplying device 10 has a tank 11, a liquid pipeline 12, a heating assembly 13, a liquid level sensing assembly, and at least one gas pipeline 16.

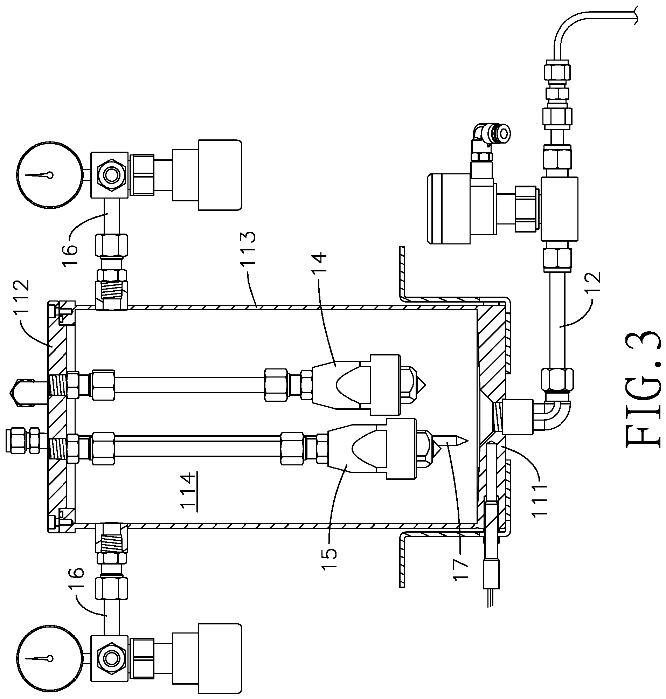

With further reference to Fig. 3, the tank 11 has a bottom base 111, a top cover 112, a surrounding wall 113, and an inner space 114. The surrounding wall 113 is connected to a periphery of the bottom base 111 and is connected to a periphery of the top cover 112. The inner space 114 is enclosed and sealed by the bottom base 111, the top cover 112, and the surrounding wall 113. In other words, the bottom base 111, the top cover 112, and the surrounding wall 113 form and enclose the inner space 114 together.

The liquid pipeline 12 is connected to the tank 11 and communicates with the inner space 114 of the tank 11. Specifically, in this embodiment, the liquid pipeline 12 is connected to the bottom base 111 of the tank 11 and communicates with the inner space 114 through the bottom base 111, but in another embodiment the liquid pipeline 12 can also be connected to the surrounding wall 113. By this, the liquid pipeline 12 is adapted to feed the liquid formic acid into the inner space 114.

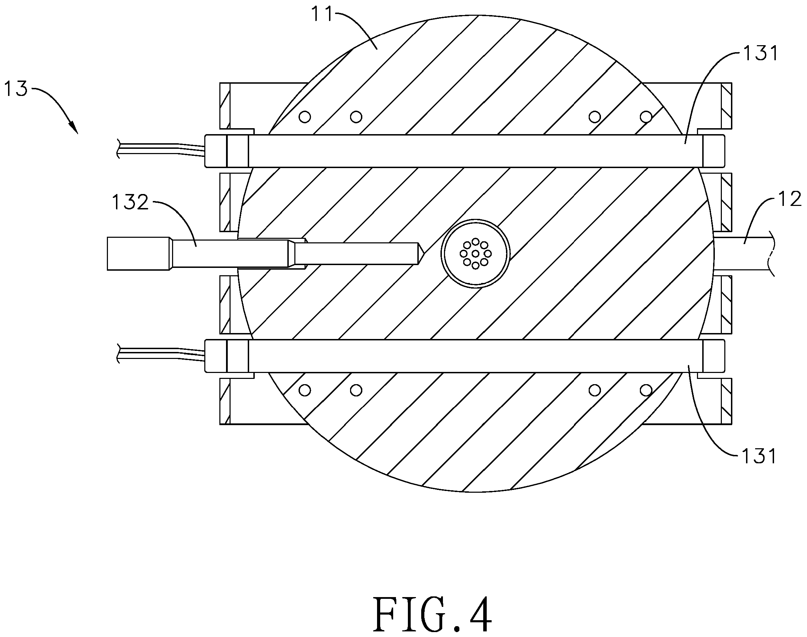

With further reference to Fig. 4, the heating assembly 13 is connected to the bottom base 111 of the tank 11, and is capable of heating the bottom base 111 so that the bottom base 111 is capable of heating the liquid formic acid to evaporate and transform the liquid formic acid into the formic acid gas. Specifically, in this embodiment, the heating assembly 13 has at least one heater 131 and a heating temperature sensor 132. The heater 131 is embedded into the bottom base 111 of the tank 11. The heater 131 is capable of generating heat to heat the bottom base 111 by contact and thermal conduction. Besides, the heating assembly 13 has two heaters 131 in the embodiment, but the amount of the heater 131 is not limited to two. The heating temperature sensor 132 is embedded into the bottom base 111 of the tank 11 to sense a temperature of the bottom base 111.

With reference to Figs. 2 and 3, the liquid level sensing assembly is mounted inside the tank 11 and is capable of sensing a liquid level of the liquid formic acid in the tank 11. Specifically, in this embodiment, the liquid level sensing assembly has a high liquid level sensor 14 and a low liquid level sensor 15.

The high liquid level sensor 14 is mounted in the tank 11. Additionally, the high liquid level sensor 14 is mounted on the top cover 112 in this embodiment, but the high liquid level sensor 14 can be mounted on the surrounding wall 113 or the bottom base 111 in another embodiment. The high liquid level sensor 14 is capable of sensing whether a liquid surface of the liquid formic acid is higher than the high liquid level sensor 14. Specifically, in this embodiment, normally the high liquid level sensor 14 is located above the liquid surface of the liquid formic acid. Therefore, when feeing in the liquid formic acid, a user is able to know that the liquid formic acid, which is fed in through the liquid pipeline 12, reaches the upper limit as the liquid surface of the liquid formic acid contacts the high liquid level sensor 14.

The low liquid level sensor 15 is located in the tank 11 and is located at a lower position compared to the high liquid level sensor 14. In other words, a height position of the low liquid level sensor 15 is lower than a height position of the high liquid level sensor 14. Additionally, the low liquid level sensor 15 is mounted on the top cover 112 in this embodiment, but the low liquid level sensor 15 can be mounted on the surrounding wall 113 or the bottom base 111 in another embodiment. The low liquid level sensor 15 is capable of sensing whether the liquid surface of the liquid formic acid is lower than the low liquid level sensor 15. Specifically, in this embodiment, normally the low liquid level sensor 15 is located under the liquid surface of the liquid formic acid. In other words, the low liquid level sensor 15 extends into the liquid formic acid and is submerged by the liquid formic acid. Therefore, when heating and evaporating the liquid formic acid such that the liquid level of the liquid formic acid is gradually descending, the user is able to know that the liquid formic acid in the tank 11 is inadequate and needs to replenish as the liquid surface is located below the low liquid level sensor 15 (which means the moment when the low liquid level sensor 15 is not submerged by the liquid formic acid).

Thus, the liquid level sensing assembly is capable of sensing whether the liquid level is in a particular range via the high liquid level sensor 14 and the liquid level sensor 15, by sensing whether the liquid surface is located between the high liquid level sensor 14 and the liquid level sensor 15. Therefore, by setting two relative positions of the high liquid level sensor 14 and the liquid level sensor 15, an amount of the liquid formic acid can be controlled in a particular range. But the structure of the liquid level sensing assembly is not limited to the abovementioned, as the liquid level sensing assembly can be implemented without the high liquid level sensor 14 and the liquid level sensor 15 in another embodiment. In that case, the liquid level sensing assembly can be implemented with only one sensor to measure an exact value of the liquid level.

The at least one gas pipeline 16 is connected to the tank 11 at a position higher than the liquid level of the liquid formic acid and communicates with the inner space 114. Specifically, in this embodiment, the gas pipeline 16 is mounted on the surrounding wall 113 of the tank 11, and communicates with the inner space 114 through the surrounding wall 113. But in another embodiment, the gas pipeline 16 also can be mounted on the top cover 112 and communicates with the inner space 114 through the top cover 112. Because the space above the high liquid level sensor 14 inside the tank 11 is filled with formic acid gas, which is generated by evaporating liquid formic acid, the gas pipeline 16 is adapted to discharge the pure formic acid gas.

Besides, an amount of the at least one gas pipeline 16 is not limited. For example, in this embodiment, the amount of the at least one gas pipeline 16 is two, but in another embodiment, the amount of the at least one gas pipeline 16 can be only one or more than two. Furthermore, the gas pipeline 16 is adapted to supply the pure formic acid gas with a pressure from 40 torr to 700 torr.

In addition, the pure formic acid gas supplying device 10 further has a liquid temperature sensor 17 in this embodiment. The liquid temperature sensor 17 is mounted through the top cover 112 of the tank 11, extends into the inner space 114, and extends into the liquid formic acid, and thus the liquid temperature sensor 17 is capable of sensing the temperature of the liquid formic acid. Furthermore, the above mentioned liquid temperature sensor 17 can be replaced by an assistant liquid level sensor (not shown in the figures). The assistant liquid level sensor is mounted through the top cover 112 of the tank 11, extends into the inner space 114, and extends into the liquid formic acid, and thus the assistant liquid level sensor is capable of sensing the exact position of the liquid surface of the liquid formic acid.

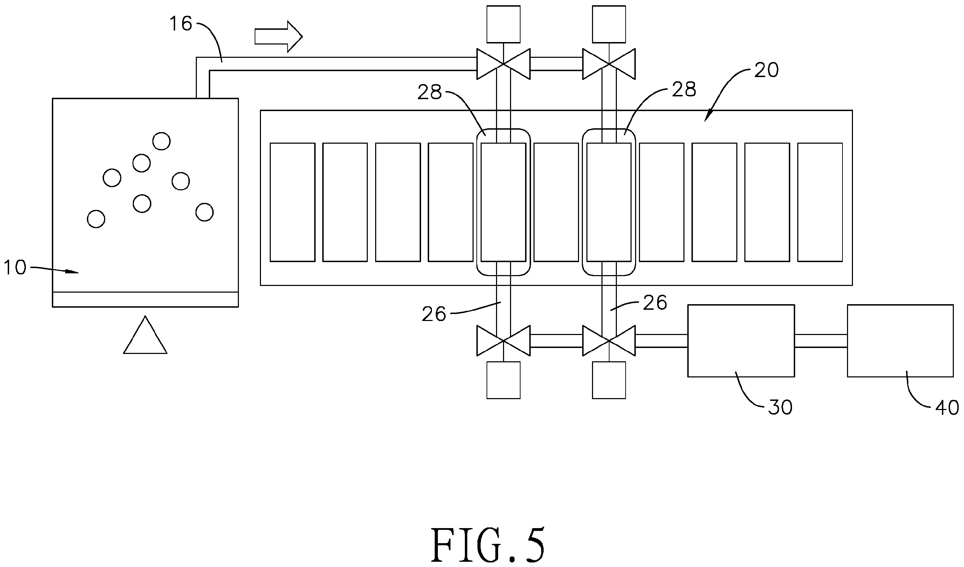

With reference to Fig. 5, a pure-formic-acid-gas-supplied soldering system of the present invention has a pure formic acid gas supplying device 10, which is identical to the one above-mentioned, and further has a multi-vacuum-chamber soldering furnace 20, a vacuum pump 30, and a formic acid exhaust processing device 40.

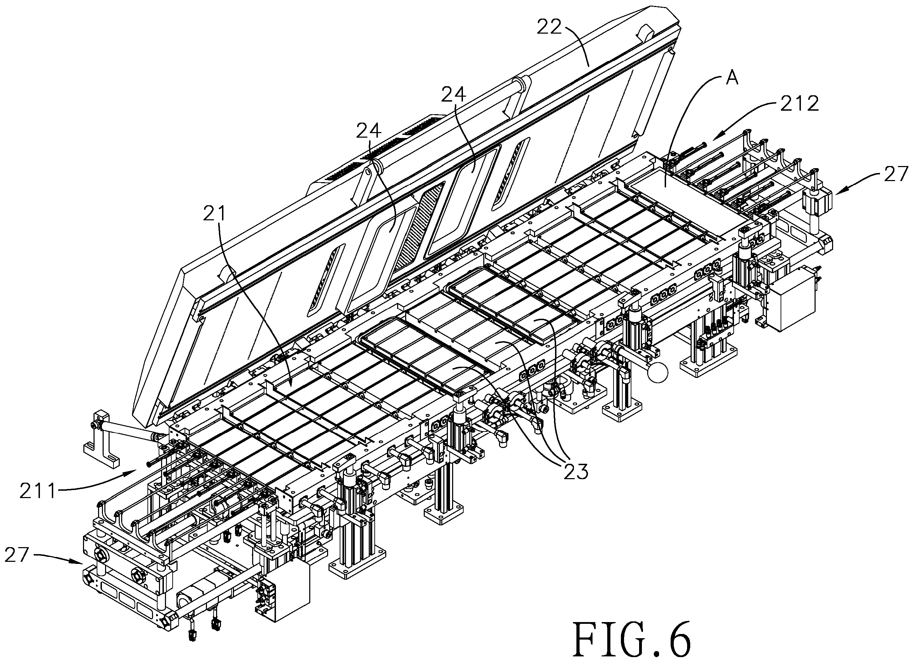

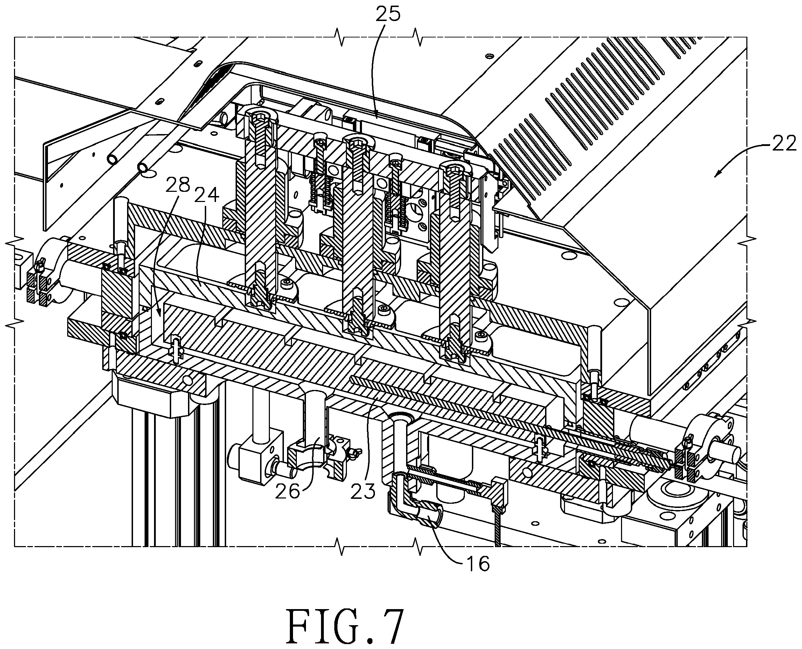

With further reference to Figs. 6 and 7, the multi-vacuum-chamber soldering furnace 20 is adapted to solder a component A and has a platform 21, an upper cover 22, multiple heating bases 23, multiple vacuum covers 24, multiple driving mechanisms 25, multiple vacuum pipelines 26, and at least one transporting mechanism 27.

Two opposite ends of the platform 21 are an inlet end 211 and an outlet end 212, respectively.

The upper cover 22 selectively covers the platform 21.

The heating bases 23 are mounted on the platform 21 and are arranged along a direction from the inlet end 211 to the outlet end 212. Each heating base 23 has a different temperature. The heating bases 23 are arranged from the inlet end 211 to the outlet end 212 and from low temperature to high temperature sequentially.

The vacuum covers 24 are mounted on the upper cover 22. When the upper cover 22 covers the platform 21, each one of the vacuum covers 22 is aligned with a respective one of the heating bases 23. The said vacuum cover 24 is capable of moving upward or downward relative to the upper cover 22 to cover and seal the corresponding heating base 23 to form a vacuum chamber 28. The gas pipeline 16 of the pure formic acid gas supplying device 10 communicates with the vacuum chamber 28 and is adapted to feed the pure formic acid gas into the vacuum chamber 28.

The driving mechanisms 25 are mounted in the upper cover 22 and are respectively connected to the vacuum covers 24. The driving mechanisms 25 are capable of moving the vacuum covers 24 relative to the upper cover 22.

The vacuum pipelines 26 are respectively connected to the vacuum chambers 28 formed by the vacuum covers 24.

The transporting mechanism 27 is connected to the platform 21 and is capable of sequentially transferring the component A to each one of the heating bases 23 from the inlet end 211 to the outlet end 212.

The vacuum pump 30 communicates with the vacuum pipelines 26 of the multi-vacuum-chamber soldering furnace 20, and is capable of withdrawing air from the vacuum chamber 28 to form a vacuum inside the vacuum chamber 28.

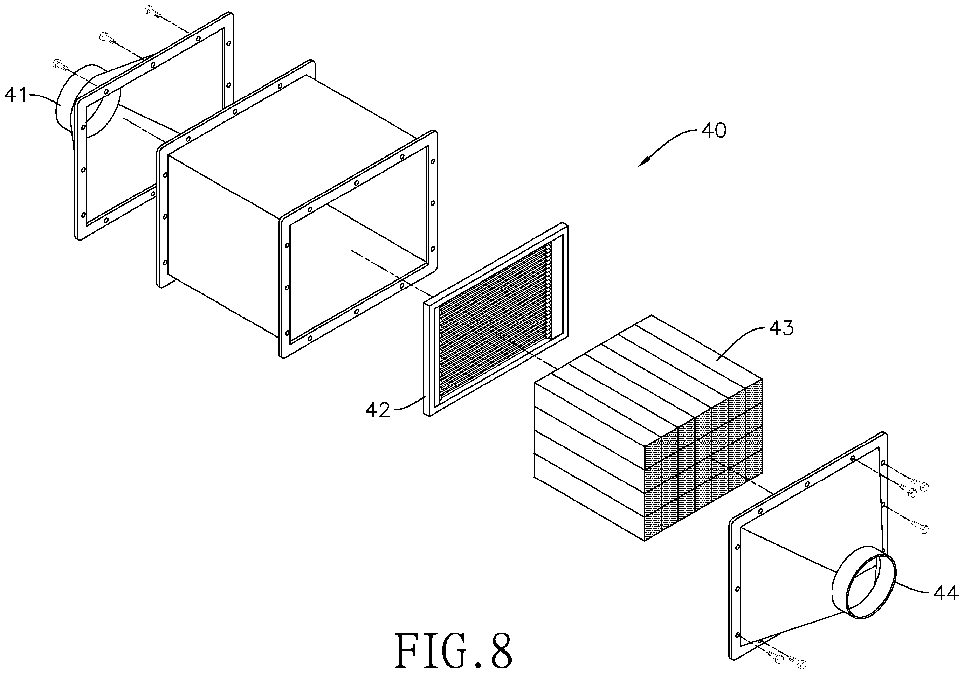

With reference to Fig. 8, the formic acid exhaust processing device 40 has an intake end 41, an atmospheric plasma generator 42, a catalyst carrier 43, and an exhaust end 44, which are arranged sequentially. The intake end 41 communicates with the vacuum pump 30 so that the vacuum pump 30 is capable of drawing the air, which is withdrawn from the vacuum chamber 28, into the formic acid exhaust processing device 40 through the intake end 41. The atmospheric plasma generator 42 communicates with the intake end 41 and is capable of generating atmospheric plasma. The catalyst carrier 43 communicates with the atmospheric plasma generator 42 and has a catalyst for oxidizing formic acid. The exhaust end 44 communicates with the catalyst carrier 43.

When being soldered, the component A is placed into the multi-vacuum-chamber soldering furnace 20 via the inlet end 211 and is placed on the heating base 23 that has the lowest temperature among all the heating bases 23. Then, the transporting mechanism 27 sequentially transports the component A to the next heating base 23, which has a higher temperature than the last one, to heat the component A gradually. When the component A is transported to the heating base 23 aligned to the vacuum cover 24, the vacuum cover 24 moves downward relative to the upper cover 22 to cover the heating base 23 and the component A, and the vacuum cover 24 also forms the vacuum chamber 28 and seals the heating base 23 and the component A inside the vacuum chamber 28. Later, the vacuum pump 30 withdraws the air in the vacuum chamber 28 and form a vacuum inside the vacuum chamber 28 through the vacuum pipeline 26. After the vacuum is made inside the vacuum chamber 28, the pure formic acid gas supplying device 10 feeds the pure formic acid gas, which is obtained by heating and evaporating the liquid formic acid, into the vacuum chamber 28. After the pure formic acid gas has completed the reaction, the vacuum pump 30 withdraws the air in the vacuum chamber 28 again, and draws the formic acid exhaust into the formic acid exhaust processing device 40 via the intake end 41. At last, the formic acid exhaust sequentially passes through the atmospheric plasma generator 42 and the catalyst carrier 43, and is transformed into CO2 and H2O by pyrolysis. On the other side, the component A is continuously transferred to the next heating base 23 until the soldering process is done.

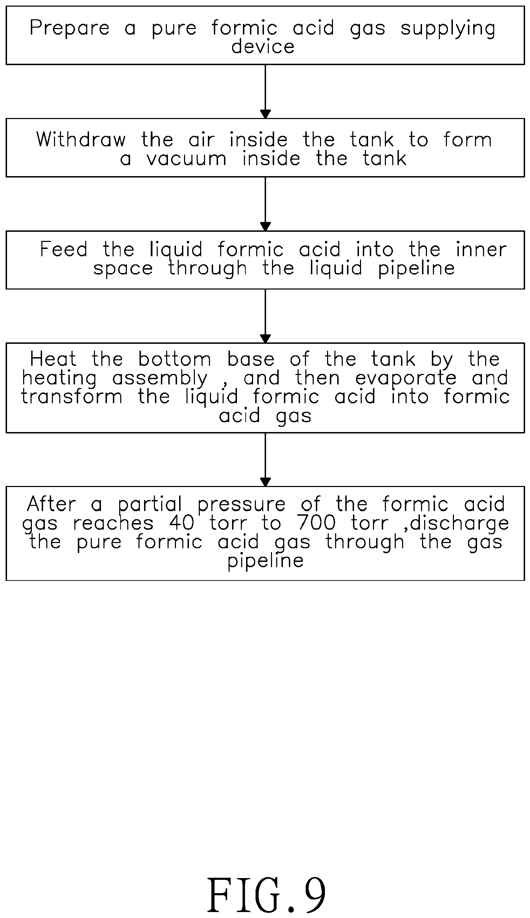

With reference to Fig. 9, the method for supplying pure formic acid gas in the present invention has multiple steps as follows:
Step 1: Prepare a pure formic acid gas supplying device 10 as above-mentioned.
Step 2: Withdraw the air inside the tank 11 to form a vacuum inside the tank 11. In this step, an air pressure device is connected to the tank 11 to withdraw the air, but it is not limited thereto, as long as the vacuum is made by any device or method.
Step 3: Feed the liquid formic acid into the inner space 114, which is a vacuum, of the tank 11 through the liquid pipeline 12.
Step 4: Heat the bottom base 111 of the tank 11 by the heating assembly 13 to indirectly heat the liquid formic acid, and then evaporate and transform the liquid formic acid into formic acid gas. During this step, because the inner space 114 is a vacuum, an upper part of the inner space 114 (which means the space above the liquid surface of the liquid formic acid) will be filled with pure formic acid gas without any other gases after the liquid formic acid is evaporated.
Step 5: After a pressure of the formic acid gas reaches 40 torr to 700 torr (decided by different soldering conditions), discharge the pure formic acid gas through the gas pipeline 16 to complete the pure formic acid gas supplying process.

Three tests are presented below to prove the actual effect of the present invention.

The first test is a solder melting simulation test. The solder comprises lead, tin, and silver, which are at a ratio of 92.5:5:2.5 sequentially. The diameters of the granules of the solder powder are 20-38µm. The test is processed in steps as follows.

At the beginning of the solder melting simulation test, a sample is exposed in an environment filled with nitrogen in order to prevent the sample from oxidizing. After the test begins, the sample is transferred into the vacuum chamber 28, the upper cover 22 is closed, and the temperature is raised to 320°C. Then, the nitrogen in the vacuum chamber 28 is removed and a vacuum is formed inside the vacuum chamber 28. Later, an appropriate formic acid gas is supplied into the vacuum chamber 28, and the state remains for an appropriate time. After the soldering process is completed, the air inside the vacuum chamber 28 is withdrawn again and the remaining formic acid gas is removed. Then, the vacuum in the vacuum chamber 28 is broken with nitrogen and the upper cover is opened. At last, the sample is transferred out of the vacuum chamber 28 to cool down.

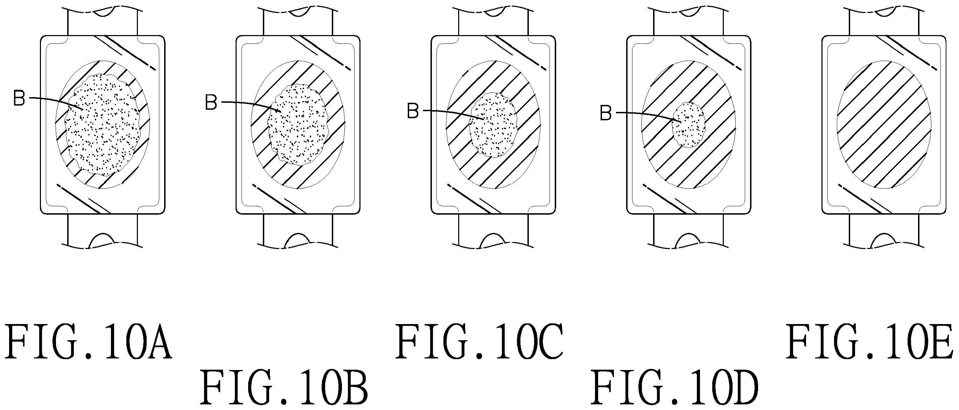

A pure formic acid gas is used in a test group while a formic-acid-nitrogen-mixed gas is used in a comparison group, and the solder melting simulation test compares the solder melting results of the two groups in different partial pressures and in different supplying times, with reference to Figs. 10A to 10E.

Figs. 10A to 10E are schematic diagrams of all the solder melting results, wherein a carrier and a glass sheet are used to clamp the solder powder to simulate real soldering, and a cross section of a solder joint after the solder is melted can be observed via the transparent characteristics of the glass sheet. The solder melting results shown in the abovementioned figures are described as below. Fig. 10A is solder melting result 1, which means only an extremely little part of solder powder B on the edge is melted. Fig. 10B is solder melting result 2, which means a little part of the solder powder B on the edge is melted. Fig. 10C is solder melting result 3, which means most part of the solder powder B is melted but a little part of the solder powder B near the center is not melted. Fig. 10D is solder melting result 4, which means most of the solder powder B is melted and only a very little part of solder powder B near the center is not melted. Fig. 10E is solder melting result 5, which means the solder powder B is completely melted.

The results of the solder melting simulation test is shown in the table as below.

| Group | Type of formic acid gas | Partial pressure of the formic acid gas (torr) | Partial pressure of the nitrogen (torr) | Supplying time (ms) | Solder melting results |
|---|---|---|---|---|---|
| 1 | pure formic acid gas | 40 | 0 | 500 | 4 |
| 2 | pure formic acid gas | 40 | 0 | 1000 | 5 |
| 3 | pure formic acid gas | 200 | 0 | 100 | 4 |
| 4 | pure formic acid gas | 200 | 0 | 200 | 5 |
| 5 | pure formic acid gas | 700 | 0 | 100 | 5 |
| 6 | formic-acid-nitrogen-mixed gas | 40 | 720 | 1000 | 1 |
| 7 | formic-acid-nitrogen-mixed gas | 40 | 720 | 3000 | 3 |
| 8 | formic-acid-nitrogen-mixed gas | 40 | 720 | 5000 | 5 |
| 9 | formic-acid-nitrogen-mixed gas | 80 | 680 | 1000 | 3 |
| 10 | formic-acid-nitrogen-mixed gas | 80 | 680 | 2000 | 4 |
| 11 | formic-acid-nitrogen-mixed gas | 80 | 680 | 3000 | 5 |

| | | | | | |
|---|---|---|---|---|---|
| Conversion Formula: 1 Torr=133.32 Pa. | | | | | |

According to the table, a comparison between group 2 and group 6 shows that under a same partial pressure of the formic acid gas and under a same supplying time, supplying pure formic acid gas obtains the solder melting result 5 (completely melted) while supplying formic-acid-nitrogen-mixed gas obtains the solder melting result 1 (only a little part of solder powder B is melted on the edge). Besides, a comparison between group 2 and group 8 shows that a reaction speed of supplying pure formic acid gas is five times faster than a reaction speed of supplying formic-acid-nitrogen-mixed gas, when the two groups both obtain the solder melting result 5 (completely melted). The two comparisons confirm that the present invention is capable of improving the soldering quality and the soldering efficiency.

The second test is a solder joint strength test, with reference to Figs. 10A to 10E. A test sample comprises a printed circuit board (PCB) and a resistor, which is 0.4 cm in length and 0.2 cm in width. The model of the force gauge is SH-200. Before the solder joint strength test, the resistor is soldered on the PCB by the steps in the solder melting simulation test, and eleven test groups are set in eleven conditions, which are the same as the solder melting simulation test. The results of the eleven test groups in the solder joint strength test are shown in the table below.

| Group | Type of formic acid gas | Partial pressure of the formic acid gas (torr) | Partial pressure of the nitrogen (torr) | Supplying time (ms) | Solder melting results | solder joint strength (gw) |
|---|---|---|---|---|---|---|
| 1 | pure formic acid gas | 40 | 0 | 500 | 4 | 470 |
| 2 | pure formic acid gas | 40 | 0 | 1000 | 5 | 610 |
| 3 | pure formic acid gas | 200 | 0 | 100 | 4 | 500 |
| 4 | pure formic acid gas | 200 | 0 | 200 | 5 | 620 |
| 5 | pure formic acid gas | 700 | 0 | 100 | 5 | 600 |
| 6 | formic-acid-nitrogen-mixed gas | 40 | 720 | 1000 | 1 | 50 |
| 7 | formic-acid-nitrogen-mixed gas | 40 | 720 | 3000 | 3 | 230 |
| 8 | formic-acid-nitrogen-mixed gas | 40 | 720 | 5000 | 5 | 580 |
| 9 | formic-acid-nitrogen-mixed gas | 80 | 680 | 1000 | 3 | 250 |
| 10 | formic-acid-nitrogen-mixed gas | 80 | 680 | 2000 | 4 | 470 |
| 11 | formic-acid-nitrogen-mixed gas | 80 | 680 | 3000 | 5 | 580 |

| | | | | | | |
|---|---|---|---|---|---|---|
| Conversion Formula: 1 Torr=133.32 Pa. | | | | | | |

According to the table above, the data of the solder joint strength test matches the cross sectional structure of the solder joint in the solder melting simulation test. For example, a comparison between group 2 and group 6 shows that under a same partial pressure of the formic acid gas and under a same supplying time, the solder melting results are respectively solder melting result 5 (completely melted) and solder melting result 1 (only a little part of the solder powder B is melted on the edge), and the solder joint strengths are respectively 610 gw and 50 gw. The matching of the two tests means the better the solder melting result, the higher the solder joint strength.

In addition, comparisons between groups 2, 4, 5 and groups 8, 11 show that under a condition of obtaining a solder melting result 5 (completely melted), a solder joint strength of the groups that are supplied with pure formic acid gas is about 20 gw to 30 gw higher than a solder joint strength of the groups that are supplied with formic-acid-nitrogen-mixed gas.

Besides, the comparison between group 2 and group 6 further shows that the solder joint strength is 560 gw higher in the group which is supplied with pure formic acid gas than the group which is supplied with formic-acid-nitrogen-mixed gas, under a same partial pressure of the formic acid gas and under a same supplying time.

Furthermore, a comparison between group 2 and group 11 shows that under a condition of obtaining the same solder melting result, the consumption of the formic acid gas is two times higher in the group which is supplied with pure formic acid gas than the group which is supplied with formic-acid-nitrogen-mixed gas, and the reaction time is three times longer in the group which is supplied with pure formic acid gas than the group which is supplied with formic-acid-nitrogen-mixed gas.

All the results above prove that the present invention is capable of strengthening solder joint.

The third test is a formic acid permeability test. The following is an introduction of basic conditions of the formic acid permeability test.

Formic acid is used to deoxidize the metal oxide on the appearance of the solder. Thus, formic acid gas is needed to permeate into the solder powder and to fully contact the surface of each solder granule, and therefore a better solder melting result can be obtained.

During soldering, the solder powder is clamped between two components or chips. Thus, the formic acid gas must permeate into the solder powder through the gap between the two components or chips, and then can only permeate from the edge of the solder powder into the center of the solder powder.

However, because the gaps between the solder granules are narrow, permeating into the center of the solder powder becomes harder for the formic acid gas as the soldering area increases (which means that the depth for which the formic acid gas permeates from the edge of the solder powder becomes shorter). If the depth for which the formic acid gas permeates is short, then the formic acid gas content in the center of the solder powder is low, and therefore the effect of reducing the oxide on the surfaces of the granules in the center of the solder powder is bad, and then leads to bad soldering effect and low solder joint strength. In other words, the reliability of soldering is low.

For example, with reference to Fig. 10A, after covering the solder powder by the glass sheet and feeding in the formic acid gas after the temperature is higher than the melting point of the solder, only the solder powder B near the edge is melted while most of the solder powder B near the center is not, which means the oxide on the surfaces of the granules near the center of the solder powder is not deoxidized.

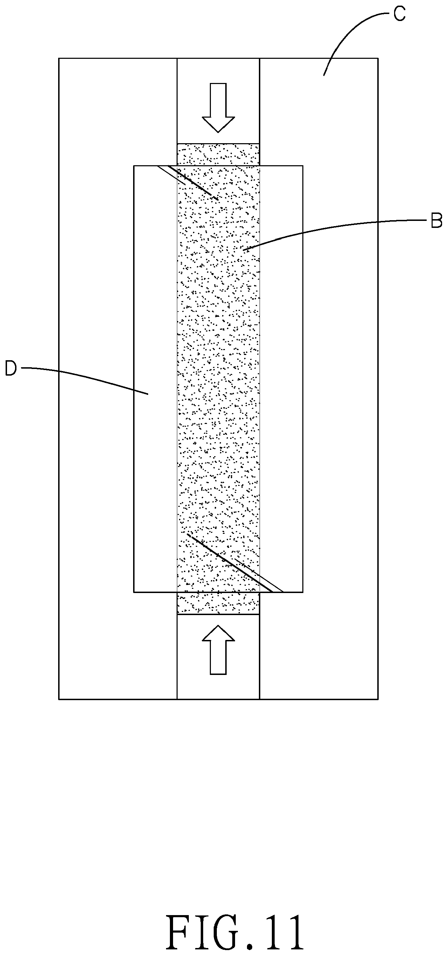

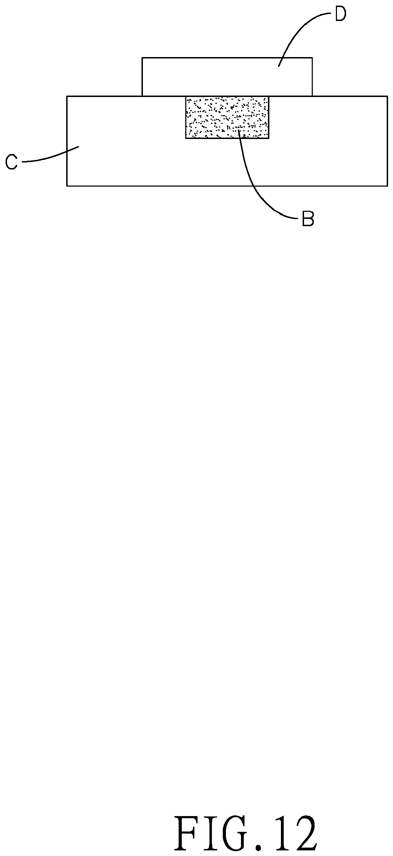

Therefore, the formic acid permeability test is run to prove that the present invention is capable of increasing the permeability of the formic acid, thereby enhancing the soldering effect and the solder joint strength. With reference to Figs. 11 and 12, the configuration of the formic acid permeability test is described as follows.

First, a groove, which is 300 µm in depth, 6 mm in width, and over 100 mm in length, is formed on a carrying plate C, and the groove is filled with solder powder B (the ratio of lead, tin, and silver is 92.5:5:2.5). Then, a glass sheet D is placed on the groove and covers the groove. The glass sheet D is 75 mm in length and over 6 mm in width. Two sides of the glass sheet D are mounted to the carrying plate C and sealed by a tape, which is airtight and heat resistant, to make the formic acid gas permeate into the solder powder B from only two open ends of the groove. A top view and a front view of the assembled sample are shown in Figs. 11 and 12, respectively.

After assembled, the sample is placed into the vacuum chamber, and then the pressure inside the vacuum chamber is decreased to under 1 torr by withdrawing the air. When the temperature is raised over the melting point (higher than 320°C), pure formic acid gas of an appropriate pressure is fed into the test group, and formic-acid-nitrogen-mixed gas of an appropriate partial pressure is fed into the comparison group. After reaction for five minutes, the air is withdrawn again and the formic acid gas is removed. Then, the vacuum is broken, and the sample is moved out and the depth of melted tin is measured after cooling down.

The results in the formic acid gas permeating test are shown in the table below. The deeper the solder melts, the better permeability and the higher reactivity the formic acid gas has, therefore being applicable to the soldering of larger chips.

| Group | Type of formic acid gas | partial pressure of the formic acid gas (torr) | partial pressure of the nitrogen (torr) | melting depth of the solder powder (mm) |
|---|---|---|---|---|
| 1 | formic-acid-nitrogen-mixed gas | 40 | 720 | 2 |
| 2 | formic-acid-nitrogen-mixed gas | 80 | 680 | 4 |
| 3 | pure formic acid gas | 40 | 0 | 11 |
| 4 | pure formic acid gas | 80 | 0 | 20 |
| 5 | pure formic acid gas | 400 | 0 | over 38 |
| 6 | pure formic acid gas | 400 | 0 | over 75 |
| 7 | pure formic acid gas | 700 | 0 | over 75 |

| | | | | |
|---|---|---|---|---|
| Conversion Formula: 1 Torr=13.32 Pa. | | | | |

According to the table, a comparison between group 1 and group 3 and a comparison between group 2 and group 4 both show that under a same partial pressure of the formic acid gas, a melting depth of the solder is deeper in the groups that are supplied with pure formic acid gas, and the melting depth of the solder is five times deeper in the groups that are supplied with pure formic acid gas than the groups that are supplied with formic-acid-nitrogen-mixed gas.

Besides, in group 5, the pressure of the formic acid gas is over 400 torr, (53328.9 Pa) and all of the solder powder B completely melts, and the melting depth is over 38 mm.

Additionally, in group 6 and group 7, one of the openings of the groove is further sealed, and thus the formic acid gas can only permeate into the solder powder B through the remaining one opening. According to the result in group 6 and group 7, regardless that the pressure of the formic acid gas is 400 torr or 700 torr, (53328.9 Pa or 93325.7 Pa) the solder is completely melted, and the melting depth is over 75 mm.

The above comparisons prove that the present invention is capable of improving the soldering effect and the solder joint strength, and is capable of reducing the processing time of soldering, thereby increasing the efficiency and the productivity.

In summary, the advantages of the present invention are derived from supplying pure formic acid gas. In order to supply pure formic acid gas, a vacuum is formed inside the tank 11 first. Then, liquid formic acid is filled into the tank 11 and is heated and evaporated, and transforms into formic acid gas. By this, the tank 11 contains only pure formic acid gas without any other gases. Therefore, the present invention supplies pure formic acid gas to prevent the formic acid gas from being obstructed in contacting metal oxide by the gases which do not participate in the reaction, thereby increasing efficiency.

When the pure formic acid gas supplying device 10 is in use, liquid formic acid is filled into the sealed inner space 114 of the tank 11 through the liquid pipeline 12, and then the bottom base 111 of the tank 11 is heated by the heating assembly 13 to heat the liquid formic acid indirectly and to evaporate it. Then, the pure formic acid gas is obtained and is capable of being supplied to the multi-vacuum-chamber soldering furnace 20 through the gas pipeline 16.

Therefore, the present invention supplies pure formic acid gas to precisely control the concentration of the formic acid, and to increase the reactivity of the formic acid (because of no obstructions from other gases). Thus, the present invention significantly shortens the cycle time of the soldering process, thereby increasing productivity, and also significantly reduces the consumption of the formic acid by controlling the concentration of the formic acid precisely and stably, and thus reduces the cost.

## Claims

1. A pure-formic-acid-gas-supplied soldering system, **characterized in that** the pure-formic-acid-gas-supplied soldering system comprises:
a pure formic acid gas supplying device (10) adapted to heat liquid formic acid and to supply formic acid gas and having
a tank (11) having
a bottom base (111);
a top cover (112);
a surrounding wall (113) connected to a periphery of the bottom base (111) and connected to a periphery of the top cover (112); and
an inner space (114) surrounded by the bottom base (111), the top cover (112), and the surrounding wall (113), and being sealed;
a liquid pipeline (12) connected to the tank (11) and communicating with the inner space (114) of the tank (11); the liquid pipeline (12) adapted to feed the liquid formic acid into the inner space (114) of the tank (11);
a heating assembly (13) connected to the bottom base (111) of the tank (11) and being capable of heating the bottom base (111) so that the bottom base (111) is capable of heating the liquid formic acid to evaporate the liquid formic acid and transform the liquid formic acid into the formic acid gas;
a liquid level sensing assembly mounted inside the tank (11) and being capable of detecting a liquid level of the liquid formic acid in the tank (11); and
at least one gas pipeline (16) connected to the tank (11) at a position higher than the liquid level of the liquid formic acid and communicating with the inner space (114) of the tank (11); the at least one gas pipeline (16) adapted to output the pure formic acid gas; wherein the at least one gas pipeline (16) is adapted to supply the pure formic acid gas with a pressure from 40 torr to 700 torr (5332.9 Pa to 93325.7 Pa);
a multi-vacuum-chamber soldering furnace (20) adapted to solder a component and having
a platform (21); two opposite ends of the platform (21) being an inlet end (211) and an outlet end (212) respectively;
an upper cover (22) selectively covering the platform (21);
multiple heating bases (23) mounted on the platform (21) and arranged along a direction from the inlet end (211) to the outlet end (212);
multiple vacuum covers (24) mounted on the upper cover (22); wherein when the upper cover (22) covers the platform (21), each one of the vacuum covers (24) is aligned with a respective one of the heating bases (23) and said vacuum cover (24) is moveable upward or downward relative to the upper cover (22) to cover and seal the corresponding heating base (23) to form a vacuum chamber (28); the at least one gas pipeline (16) communicating with the vacuum chamber (28) and adapted to feed the pure formic acid gas into the vacuum chamber (28);
multiple driving mechanisms (25) mounted in the upper cover (22) and respectively connected to the vacuum covers (24); the driving mechanisms (25) being capable of moving the vacuum covers (24) relative to the upper cover (22);
multiple vacuum pipelines (26) respectively connected to the vacuum chambers (28) formed by the vacuum covers (24); and
at least one transporting mechanism (27) connected to the platform (21) and being capable of sequentially transferring the component to each one of the heating bases (23) from the inlet end (211) to the outlet end (212);
a vacuum pump (30) communicating with the vacuum pipelines (26) of the multi-vacuum-chamber soldering furnace (20) and being capable of withdrawing air from the vacuum chamber (28) to form a vacuum inside the vacuum chamber (28); and
a formic acid exhaust processing device (40) having
an intake end (41) communicating with the vacuum pump (30); the vacuum pump (30) being capable of withdrawing the air from the vacuum chamber (28) into the formic acid exhaust processing device (40) through the intake end (41);
an atmospheric plasma generator (42) communicating with the intake end (41) and being capable of generating atmospheric plasma;
a catalyst carrier (43) communicating with the atmospheric plasma generator (42) and containing a catalyst for oxidizing formic acid; and
an exhaust end (44) communicating with the catalyst carrier (43); wherein the intake end (41), the atmospheric plasma generator (42), the catalyst carrier (43), and the exhaust end (44) are arranged sequentially.

## Patentansprüche

1. Lötsystem mit Zufuhr von reinem Ameisensäuregas, **dadurch gekennzeichnet, dass** das Lötsystem mit Zufuhr von reinem Ameisensäuregas umfasst:
eine Vorrichtung (10) zur Zufuhr von reinem Ameisensäuregas, die zum Erhitzen von flüssiger Ameisensäure und zur Zufuhr von Ameisensäuregas ausgelegt ist und einen Tank (11) aufweisend
eine Bodenbasis (111);
eine oberseitige Abdeckung (112);
eine umgebende Wand (113), die mit einem Umfang der Bodenbasis (111) verbunden ist und mit einem Umfang der oberseitigen Abdeckung (112) verbunden ist; und
einen Innenraum (114), der von dem Bodenbasis (III), der oberseitigen Abdeckung (112) und der umgebenden Wand (113) umgeben ist und abgedichtet ist;
eine Flüssigkeitsleitung (12), die mit dem Tank (11) verbunden ist und mit dem Innenraum (114) des Tanks (11) kommuniziert; wobei die Flüssigkeitsleitung (12) dazu ausgelegt ist, die flüssige Ameisensäure in den Innenraum (114) des Tanks (11) zuzuführen;
eine Heizbaugruppe (13), die mit der Bodenbasis (111) des Tanks (11) verbunden ist und ist in der Lage ist, die Bodenbasis (111) zu erhitzen, so dass die Bodenbasis (111) in der Lage ist, die flüssige Ameisensäure zu erhitzen, um die flüssige Ameisensäure zu verdampfen und die flüssige Ameisensäure in das Ameisensäuregas umzuwandeln;
eine Flüssigkeitsstanderfassungsbaugruppe, die im Inneren des Tanks (11) montiert ist und in der Lage ist, einen Flüssigkeitsstand der flüssigen Ameisensäure im Tank (11) zu erfassen; und
mindestens eine Gasleitung (16), die mit dem Tank (11) an einer Position verbunden ist, die höher als der Flüssigkeitsstand der flüssigen Ameisensäure ist, und mit dem Innenraum (114) des Tanks (11) kommuniziert; wobei die mindestens eine Gasleitung (16) dazu ausgelegt ist, das reine Ameisensäuregas abzugeben; wobei die mindestens eine Gasleitung (16) dazu ausgelegt ist, das reine Ameisensäuregas mit einem Druck von 40 Torr bis 700 Torr (5332,9 Pa bis 93325,7 Pa) zuzuführen;
einen Mehrvakuumkammer-Lötofen (20), der ausgelegt ist, um einen Bauteil zu löten, und aufweisend
eine Plattform (21); wobei zwei gegenüberliegende Enden der Plattform (21) jeweils ein Einlassende (211) und ein Auslassende (212) sind;
eine obere Abdeckung (22), die die Plattform (21) selektiv abdeckt;
mehrere Heizbasen (23), die an der Plattform (21) montiert und entlang einer Richtung vom Einlassende (211) zum Auslassende (212) angeordnet sind;
mehrere Vakuumabdeckungen (24), die an der oberen Abdeckung (22) montiert sind; wobei, wenn die obere Abdeckung (22) die Plattform (21) abdeckt, eine jede der Vakuumabdeckungen (24) mit einer jeweiligen der Heizbasen (23) ausgerichtet ist und die Vakuumabdeckung (24) relativ zu der oberen Abdeckung (22) nach oben oder unten bewegbar ist, um die entsprechende Heizbasis (23) abzudecken und abzudichten, um eine Vakuumkammer (28) zu bilden; wobei die mindestens eine Gasleitung (16) mit der Vakuumkammer (28) kommuniziert und ausgelegt ist, um das reine Ameisensäuregas in die Vakuumkammer (28) zuzuführen;
mehrere Antriebsmechanismen (25), die in der oberen Abdeckung (22) montiert und jeweils mit den Vakuumabdeckungen (24) verbunden sind; wobei die Antriebsmechanismen (25) in der Lage sind, die Vakuumabdeckungen (24) relativ zur oberen Abdeckung (22) zu bewegen;
mehrere Vakuumleitungen (26), die jeweils mit den durch die Vakuumabdeckungen (24) gebildeten Vakuumkammern (28) verbunden sind; und
mindestens einen Transportmechanismus (27), der mit der Plattform (21) verbunden ist und in der Lage ist, den Bauteil sequentiell an eine jede der Heizbasen (23) vom Einlassende (211) zum Auslassende (212) zu transferieren;
eine Vakuumpumpe (30), die mit den Vakuumleitungen (26) des Mehrvakuumkammer-Lötofens (20) kommuniziert und in der Lage ist, Luft aus der Vakuumkammer (28) abzuziehen, um ein Vakuum innerhalb der Vakuumkammer (28) zu bilden; und
eine Vorrichtung zur Aufbereitung von Ameisensäureabgas (40) aufweisend ein Ansaugende (41), das mit der Vakuumpumpe (30) kommuniziert; wobei die Vakuumpumpe (30) in der Lage ist, die Luft aus der Vakuumkammer (28) durch das Ansaugende (41) in die Vorrichtung zur Aufbereitung von Ameisensäureabgas (40) abzuziehen;
einen atmosphärischen Plasmagenerator (42), der mit dem Ansaugende (41) kommuniziert und in der Lage ist, atmosphärisches Plasma zu erzeugen;
einen Katalysatorträger (43), der mit dem atmosphärischen Plasmagenerator (42) kommuniziert und einen Katalysator zur Oxidation von Ameisensäure enthält; und
ein Entlüftungsende (44), das mit dem Katalysatorträger (43) kommuniziert; wobei das Ansaugende (41), der Atmosphärenplasmagenerator (42), der Katalysatorträger (43) und das Entlüftungsende (44) sequentiell angeordnet sind.

## Revendications

1. Système de soudure alimenté en gaz d'acide formique pur, **caractérisé en ce que** le système de soudure alimenté en gaz d'acide formique pur comprend :
un dispositif d'alimentation en gaz d'acide formique pur (10) conçu pour chauffer de l'acide formique liquide et pour fournir du gaz d'acide formique et comprenant
un réservoir (11) ayant
une base inférieure (111) ;
un couvercle supérieur (112) ;
un mur d'enceinte (113) relié à une périphérie de la base inférieure (111) et relié à une périphérie du couvercle supérieur (112) ; et
un espace intérieur (114) entouré par la base inférieure (III), le couvercle supérieur (112) et le mur d'enceinte (113), et qui est scellé ;
un pipeline de liquide (12) relié au réservoir (11) et communiquant avec l'espace intérieur (114) du réservoir (11); le pipeline de liquide (12) pouvant introduire l'acide formique liquide dans l'espace intérieur (114) du réservoir (11) ;
un ensemble de chauffage (13) relié à la base inférieure (111) du réservoir (11) et pouvant chauffer la base inférieure (111) de sorte que la base inférieure (111) soit capable de chauffer l'acide formique liquide pour évaporer l'acide formique liquide et transformer l'acide formique liquide en gaz d'acide formique ;
un ensemble de détection du niveau de liquide monté à l'intérieur du réservoir (11) et pouvant détecter un niveau de liquide de l'acide formique liquide dans le réservoir (11) ; et
au moins un gazoduc (16) relié au réservoir (11) à une position plus élevée que le niveau de liquide de l'acide formique liquide et communiquant avec l'espace intérieur (114) du réservoir (11) ; l'au moins un gazoduc (16) adapté à la sortie du gaz d'acide formique pur ; dans lequel l'au moins un gazoduc (16) est conçu pour fournir du gaz d'acide formique pur à une pression de 40 torr à 700 torr (5332,9 Pa à 93325,7 Pa) ;
un four à souder à plusieurs chambres à vide (20) conçu pour souder un composant et ayant
une plate-forme (21) ; deux extrémités opposées de la plate-forme (21) étant respectivement une extrémité d'entrée (211) et une extrémité de sortie (212) ;
un couvercle supérieur (22) recouvrant sélectivement la plate-forme (21) ;
plusieurs bases chauffantes (23) montées sur la plate-forme (21) et disposées le long d'une direction allant de l'extrémité d'entrée (211) à l'extrémité de sortie (212) ;
plusieurs couvercles à vide (24) montés sur le couvercle supérieur (22) ; dans lequel lorsque le couvercle supérieur (22) recouvre la plate-forme (21), chacun des couvercles à vide (24) est aligné sur l'une des bases chauffantes (23) et ledit couvercle à vide (24) peut être déplacé vers le haut ou vers le bas par rapport au couvercle supérieur (22) pour couvrir et sceller la base chauffante correspondante (23) afin de former une chambre à vide (28) ; l'au moins un gazoduc (16) communiquant avec la chambre à vide (28) et conçu pour alimenter la chambre à vide (28) en gaz d'acide formique pur ;
plusieurs mécanismes d'entraînement (25) montés dans le couvercle supérieur (22) et reliés respectivement aux couvercles à vide (24) ; les mécanismes d'entraînement (25) pouvant déplacer les couvercles à vide (24) par rapport au couvercle supérieur (22) ;
plusieurs pipelines à vide (26) respectivement reliés aux chambres à vide (28) formées par les couvercles à vide (24) ; et
au moins un mécanisme de transport (27) relié à la plate-forme (21) et pouvant transférer séquentiellement le composant à chacune des bases chauffantes (23) de l'extrémité d'entrée (211) à l'extrémité de sortie (212) ;
une pompe à vide (30) communiquant avec les pipelines à vide (26) du four à souder à plusieurs chambres à vide (20) et pouvant aspirer l'air de la chambre à vide (28) pour former un vide à l'intérieur de la chambre à vide (28) ; et
un dispositif de traitement des gaz d'échappement d'acide formique (40) ayant
une extrémité d'admission (41) communiquant avec la pompe à vide (30) ; la pompe à vide (30) pouvant aspirer l'air de la chambre à vide (28) dans le dispositif de traitement des gaz d'échappement d'acide formique (40) par l'extrémité d'admission (41) ;
un générateur de plasma atmosphérique (42) communiquant avec l'extrémité d'admission (41) et pouvant générer un plasma atmosphérique ;
un support de catalyseur (43) communiquant avec le générateur de plasma atmosphérique (42) et contenant un catalyseur pour l'oxydation de l'acide formique ; et
une extrémité d'échappement (44) communiquant avec le support de catalyseur (43) ; l'extrémité d'admission (41), le générateur de plasma atmosphérique (42), le support de catalyseur (43) et l'extrémité d'échappement (44) étant disposés de manière séquentielle.
